# EUROPEAN PATENT APPLICATION

(11) **EP 1 964 639 A1**
(43) Date of publication of application: **03.09.2008**
(21) Application number: 07103246.0
(22) Date of filing: 28.02.2007
(51) Int. Cl.: B23K 11/11, B23K 11/25, B23K 11/30, G01B 11/24

(54) **Method of and system for controlling tools comprising spot welding electrodes using image obtaining and comparison means**

(71) Applicant: ABB Research Ltd., 8050 Zürich (CH)
(72) Inventor: Tunklev, Magnus, 725 96 Västeras (SE)
(74) Representative: Reyier, Ann-Mari

(57) **Abstract**

The present invention relates to a method of and a system for controlling the status of at least one tool (12) comprising electrodes (18) to be used for spot welding, which electrodes (18) are arranged on a movable tool holder (10), the method comprising the steps of: arranging said at least one tool (12) in the range of vision of an image obtaining means (30), obtaining an image of said at least one tool (12) by said images obtaining means (30), handling said obtained image in order to retrieve information regarding the status of said at least one tool (12), comparing said obtained image information with pre-obtained reference data, and initiating a tool handling action if said obtained image information is outside said reference data.

## Description

### TECHNICAL AREA

The present invention relates to a method and device for controlling tools and in particular the wear on tools such as welding electrodes.

### TECHNICAL BACKGROUND

Today's manufacturing industry utilises robots to a large extent where one such application is spot-welding of thin metal sheet structures, such as car bodies. A spot-welding gun comprises short cylindrical pieces, electrodes, that have a rounded or cambered end surface having certain diameter measures, which end surface contacts the material to be spot-welded, and a transitional cone-shaped surface, and where the other end is mounted in a holder of the spot weld gun. Another cylindrical piece is mounted on the opposite side of the material to be spot-welded and an electrical current is sent between the electrodes, creating a local heating and thus a weld.

During welding, the end surfaces of the electrodes are worn such that the diameter of the end surfaces becomes larger up to a point where the quality of the weld deteriorates below an acceptable level. The electrodes must then be re-shaped or replaced by new electrodes.

The inspection of the electrodes is today for example in robot applications done by laser-based measuring equipment, which requires that the electrodes are positioned in several different positions in relation to the laser light and the light-receiving sensors for obtaining information regarding the extent of the wear. This operation is rather time-consuming, where a skilled operator directly would see if the electrodes needed to be replaced.

Another example of measuring equipment is disclosed in patent document DE 198 54 956 where a spot-welding electrode is placed in a holder such that its end surface may be illuminated by a light bundle directed perpendicular to the end surface. The light that is reflected from the end surface is detected by two light-receiving sensors, one perpendicular to the end surface and one parallel to the end surface. The detected light of the two sensors is then processed to obtain information regarding the wear of the electrodes. Also this method is rather time consuming, and in particular because the electrodes need to be removed from the welding tool and placed in the measuring equipment. It is thus not intended for on-line measurements but is more for laboratory use.

There is thus a need for a simple, reliable and time and cost efficient system for measuring the wear of spot-welding electrodes.

### SUMMARY OF THE INVENTION

The aim of the present invention is to remedy the drawbacks with existing measuring systems and to provide a fast and flexible system for measuring the wear of spot-welding tools. In the following description the tools are understood as being the spot-welding electrodes that are removably arranged in a tool holder, being the spot welding gun.

This aim is obtained by the features of the independent patent claims. Preferable embodiments are subject of the dependent patent claims.

According to one object of the invention, it is characterised by a method for controlling the status of work tools such as electrodes to be used for spot welding, which electrodes are arranged on a movable tool holder, comprising the steps of arranging the tools in the range of vision of an image obtaining means, obtaining an image of the tools by said images obtaining means, handling said obtained image in order to retrieve information regarding the status of the tools, comparing said obtained image information with pre-obtained reference data, and initiating a tool handling action when said obtained image information is outside said reference data.
According to a further object of the invention, the step of handling said obtained image comprises image pattern recognition and wherein comparing said image information comprises comparing the obtained pattern with reference patterns.

According to another object of the invention, the step of handling said obtained image comprises performing measurements on the obtained image and wherein comparing said image information comprises comparing the measurements with reference measurements.

The step of initiating a tool change could comprise alarming an operator and/or comprise moving said movable tool holder to a tool changing position.

According to a further object of the invention, it further comprises the step of activating said image obtaining means, said obtaining of an image, handling of the image and comparison when the tools are in the range of vision.

A plurality of image obtaining means could be used for controlling a plurality of tools, wherein the step of activating said image obtaining means, said obtaining of an image, handling of the image and comparison is performed for each one of the plurality of tools.

According to the invention it could comprise the step of setting up a queue when more than one tool is to be controlled at the same time.

According to yet an object of the invention, when the plurality of tools used is of different shape, type and/or size, reference data are obtained from all the used tools and the comparison of an actual tool is performed with pre-obtained reference data of that particular type of tool.
According to a further object, a system according to the present invention comprises means for activating said image obtaining means, said obtaining of an image, handling of the image and comparison.

According to another object, the image obtaining means is at least one web camera connected to the activating means.

Preferably the means for activating is a computer, which computer comprises the means for handling said obtained image and means for comparing said image with reference data.

Also preferably, said movable tool holder is an industrial robot comprising a control system.

When a robot is used, the control system of the robot is capable of the activation of said image obtaining means, said obtaining of an image, handling of the image and comparison.

The control system could be interconnected to said computer for interchange of information and data.

According to yet an object of the invention, it comprises a plurality of web cameras connected to said computer.

The advantages with the present invention are several. The controlling of the status of tools is simplified in comparison with the state of the art since the tools are still on the tool holder when the control is performed. The tools are simply brought in the range of vision, after which an image is obtained. This image is then handled so that it may be compared to pre-obtained reference data, where the reference data ranges from an unused tool to a tool worn so much that it needs to be reshaped. If the obtained image information is within the range of reference data, then the tools may be used further; if not a tool handling action is initiated.

The obtained image information could comprise pattern recognition whereby the pattern or silhouette of the tool is compared to reference silhouettes. If outside the reference range, then the tool is to be reshaped. The obtained image information could also comprise performing measurements on the obtained image and to compare these measurements with reference measurements ranging from an unused tool to a tool worn so much that it needs to be reshaped. Again, if outside the reference range, then the tool is to be reshaped.

If a tool needs to be reshaped or replaced, an operator is alerted by visual and/or audio means. The movable tool holder could also be moved to a tool handling position, facilitating the reshaping or replacement of the tool for the operator. In the tool handling position, there could also be provided means that automatically handles the tools.

The method and system according to the present invention are also suitable for controlling a plurality of tools. Either the tools are all of the same sort, which means a very simple handling of obtained images, but the method and system could also handle different types and sizes of tools. A number of pre-obtained reference data is then used where specific reference data is used for an actual tool to be controlled.

Preferably a system utilizing web cameras connected to a single computer is used. This is especially advantageous when a plurality of tools, for example handled by industrial robots, are used in a factory. Each work area or robot is then equipped with a camera connected to the computer. When the tool of a robot is moved to the camera, this initiates a control cycle as described. The system could also handle the case where more than one tool is to be controlled at the same time, by setting up a queue.

With the present invention, a number of different camera types can be utilized. One preferable embodiment is to use an ordinary web camera. This greatly lowers the cost of the system. Further, the system could advantageously be used with a number of spot welding robots working in a plant. Each robot could then be provided with a camera and all the cameras are preferably connected to only one computer capable of handling the images.

When the program sequence triggers the robot to move in position of the camera, the computer of the vision system could be triggered, for example by a signal from the control program of the robot, to obtain images with the camera connected to that particular robot, i.e. the computer is in stand-by mode until it receives a signal. The signal should thus indicate which robot is ready for measurement and thus which camera that should be activated. As mentioned above, when the vision software has performed the comparison, a signal is sent to the robot to continue. Either it is moved to the replacement position or it resumes its normal working program. Further to moving the robot to the camera, it is also feasible to have the camera mounted movable to a certain control position, if for some reason it is difficult to place a camera in a fixed position in relation to the robot.

If more than one robot requests the computer to obtain images from the cameras, a queue is created by the software, whereby one robot at the time is handled by the vision software. However the obtaining and analysis of an image should not take very long so the robots should not have to wait very long for their turn.

The obtained measurements of the electrodes could preferably be stored in the computer whereby it could be possible to follow the status of the electrodes graphically or in tables. Visualizing of statistics of different welding data in connection with the electrode wear could be included as a part of the program, whereby the welding data is transferred from the welding equipment control program to the computer with the vision software.

If all welding robots are equipped with the same type of electrodes, only one set of preset data parameters and/or images is required in order to be able to perform the function. If different tools are used by different robots, more sets have to be available to the vision software and it must also be able to know the type of tools that a robot, requesting a control of the tools, is equipped with. The preset data parameters and/or images may be entered in different ways, where one can be "learning" where the camera obtains images of an unworn electrode, which are stored in the computer, to be used as reference images. Then the deviating limits may be programmed. It is also feasible to obtain and use the image of an electrode worn to the limit, store this image in the computer and use it as also as a reference image.

According to a variant of the present invention, cameras having increased functionality could be utilized. There are a number of vision cameras on the market that are provided with electronic circuits and software capable of not only obtaining an image but also to process the obtained images. In this case, the preset data parameters and/or images of different tools may be stored in the computer and via a connection and I/O means of the camera be downloaded to the camera. The camera could further send signals via the I/O means to the control system of the robot to either resume its work program or move to a tool handling position after the measurement of the tools. The obtained images from the camera could be transmitted to the computer for storage and for different status and/or statistical purposes. When such cameras are used, the queuing is omitted since each camera is capable of evaluating the wear of the tools.

The method according to the present invention may be implemented as software, hardware, or a combination thereof. A computer program product implementing the method or a part thereof comprises software or a computer program run on a general purpose or specially adapted computer, processor or microprocessor. The software includes computer program code elements or software code portions that make the computer perform the method. The program may be stored in whole or part, on, or in, one or more suitable computer readable media or data storage means such as a magnetic disk, CD-ROM or DVD disk, hard disk, magneto-optical memory storage means, in RAM or volatile memory, in ROM or flash memory, as firmware, or on a data server. Such a computer program product can also be supplied via a network, such as Internet.

In all a very rapid, versatile and inexpensive method and system is obtained by the present invention.

These and other aspects of and advantages with the present invention will become apparent from the following detailed description and from the accompanying drawings.

### BRIEF DESCRIPTION OF THE DRAWINGS

In the following detailed description of the invention, reference will be made to the accompanying drawings, of which
Fig. 1 schematically shows a system according to the present invention utilized on a robot for spot welding, and
Fig. 2 schematically shows electrodes used for spot welding.

### DETAILED DESCRIPTION OF THE INVENTION

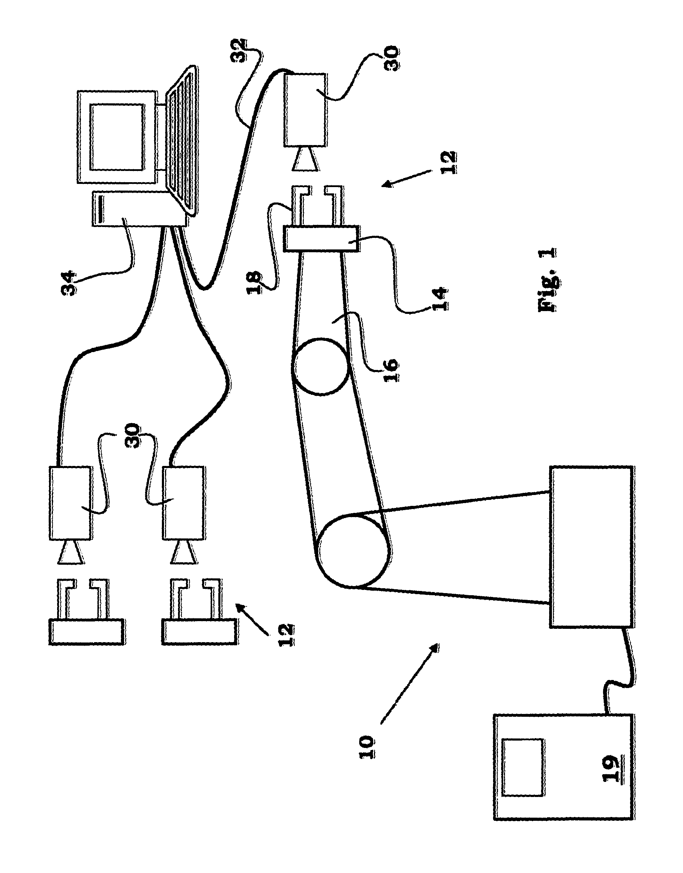

The system according to the present invention is shown schematically in Fig. 1. There is shown a robot 10 arranged with a spot welding equipment 12 attached to a swivel 14 arranged at the end of the robot arm 16. The spot welding equipment comprises two electrodes 18 facing each other and arranged to be movable towards and away from each other. The electrodes are connected to a power source (not shown) for providing the necessary current and voltage for performing spot welds. The movements of the robot are controlled by a robot control program software in a robot controller 19.

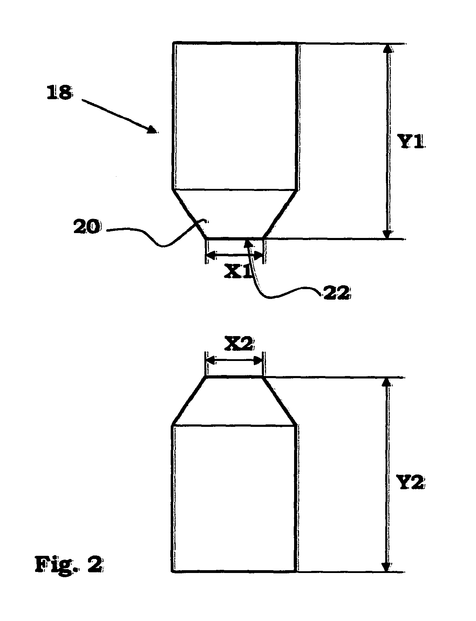

As can be seen from Fig. 2, the electrodes 18 have a conical part 20 at the front end and a flat surface 22, which surface comes in contact with the work piece during welding. The electrodes are worn during the spot welding process such that the material at the front end is removed. This means that during work the electrodes become shorter, i.e. the length measure Y becomes shorter. The wear also causes the contact surface 22 to become larger, i.e. the diameter measure X becomes larger. When the electrodes have been used so much that the distances Y and X deviate from nominal values by predetermined values, the quality of the spot welds is deteriorated such that the electrodes have to be reshaped or possibly replaced.

According to the present invention, a method and system is provided for controlling the state of the electrodes. A camera 30 is arranged in the vicinity of the robot, which camera is connected via electrical wiring 32 to a computer 34. The computer is arranged with a vision software capable of handling images taken by the camera.

The vision software could utilize different parameters of the images obtained for measuring the wear of the electrodes. The robot control program is in addition to its normal working program provided with a program sequence capable of moving the robot such that the electrodes are brought in front of the camera. Either one electrode at the time is brought in front of the camera for obtaining an image of each electrode and evaluation of that image, or both electrodes are visual before the camera for simultaneous evaluation of both electrodes.

In either case, the vision software could either utilize pattern recognition for identifying the wear, whereby the obtained side view pattern of the electrodes is compared with a reference pattern range, where one end point is the obtained and pre-stored pattern of an unworn electrode and the other end point is the obtained and pre-stored pattern of an electrode worn to the extent of reshaping or replacement. If the comparison of patterns is within the reference range, the electrodes could be used further, but if the comparison of patterns is outside the reference range, this is an indication that the electrodes are so worn that they have to be reshaped.

This in turn could trigger the robot to move to a certain position where an operator can replace the electrodes, whereby also the operator is alerted of the condition of the electrodes. The operator could also be alerted by visual and/or audio means. The replacement of the electrodes could of course also be made automatically by suitable tool handling means.

The vision software could instead, or in combination with pattern recognition, measure certain electrode parameters from the obtained image. Figure 2 shows parameters that could be measured, i.e. the length of each electrode (measurement Y) and the diameter of the contact surface (measurement X). The measurements are compared to a reference range spanning from measurements of an unworn electrode to measurements of an electrode worn such that it should be reshaped or replaced. If the measured values are outside the acceptable reference range (from new to replace limit), the above movement of the robot and alerting of an operator is performed.

It is to be understood that the embodiments described above and shown in the drawings are to be regarded only as non-limiting examples of the invention and that it may be modified within the scope of the patent claims.

## Claims

1. Method for controlling the status of at least one tool comprising electrodes to be used for spot welding, which electrodes are arranged on a movable tool holder, comprising
- arranging said at least one tool in the range of vision of an image obtaining means,
- obtaining an image of said at least one tool by said images obtaining means,
- handling said obtained image in order to retrieve information regarding the status of said at least one tool,
- comparing said obtained image information with pre-obtained reference data, and
- initiating a tool handling action when said obtained image information is outside said reference data.

2. Method according to claim 1, wherein the step of handling said obtained image comprises image pattern recognition and wherein comparing said image information comprises comparing the obtained pattern with reference patterns.

3. Method according to claim 1, wherein the step of handling said obtained image comprises performing measurements on the obtained image and wherein comparing said image information comprises comparing the measurements with reference measurements.

4. Method according to any of the preceding claims, wherein said step of tool handling action comprises alarming an operator.

5. Method according to any of the preceding claims, wherein said step of tool handling action comprises moving said movable tool holder to a tool reshaping or changing position.

6. Method according to any of the preceding claims, wherein it further comprises the step of activating said image obtaining means, said obtaining of an image, handling of the image and comparison when the tools are in the range of vision.

7. Method according to claim 6, wherein a plurality of image obtaining means are used for controlling a plurality of tools, and wherein the step of activating said image obtaining means, said obtaining of an image, handling of the image and comparison is performed for each one of the plurality of tools.

8. Method according to claim 7, wherein it further comprises the step of setting up a queue when more than one tool is to be controlled at the same time.

9. Method according to claim 7 or 8, wherein, when the plurality of tools used are of different shape, type and/or size, obtain reference data from all the tools used and perform the comparison of an actual tool with pre-obtained reference data of that particular type of tool.

10. System for controlling the status of at least one tool, comprising electrodes to be used for spot welding, which electrodes are arranged on a movable tool holder, comprising
- means capable of arranging said at least one tool in the range of vision of an image obtaining means,
- means for obtaining an image of said at least one tool by said images obtaining means,
- means capable of handling said obtained image in order to retrieve information regarding the status of said at least one tool,
- means capable of comparing said obtained image information with reference data, and
- means capable of initiating a tool handling action if said obtained image information is outside said reference data.

11. System according to claim 10, wherein the means capable of handling said obtained image comprises image pattern recognition means and wherein comparing said image information comprises means for comparing the obtained pattern with reference patterns.

12. System according to claim 10, wherein the means capable of handling said obtained image comprises means for performing measurements on the obtained image and wherein comparing said image information comprises means for comparing the measurements with reference measurements.

13. System according to any of the preceding claims 10 to 12, wherein said means for initiating a tool handling action comprises an alarm.

14. System according to any of the preceding claims 10 to 13, wherein said means for initiating a tool handling action comprises moving said movable tool holder to a tool reshaping or changing position.

15. System according to any of the preceding claims 10 to 14, comprising means for activating said image obtaining means, said obtaining of an image, handling of the image and comparison.

16. System according to claim 10, wherein the image obtaining means is at least one web camera connected to the activating means.

17. System according to claim 16, wherein the means for activating is a computer, which computer comprises the means for handling said obtained image and means for comparing said image with reference data.

18. System according to any of the preceding claims 10 to 16, wherein said movable tool holder is an industrial robot comprising a control system.

19. System according to claim 18, wherein the control system of the robot is capable of the activation of said image obtaining means, said obtaining of an image, handling of the image and comparison.

20. System according to claim 18, wherein the control system is interconnected to said computer for interchange of information and data.

21. System according to claim 16, wherein it comprises a plurality of web cameras connected to said computer.

22. System according to claim 10, wherein it comprises a camera arranged with electric circuitry and software capable of handling said obtained image in order to retrieve information regarding the status of said at least one tool, and capable of comparing said obtained image information with reference data.

23. System according to claim 22, wherein said electric circuitry and software is capable of initiating a tool handling action if said obtained image information is outside said reference data.

24. System according to any of the claims 22 or 23, wherein it further comprises a computer and means for communication between said camera and said computer.

25. System according to claim 24, wherein the camera is capable of receiving reference data stored in said computer.

26. System according to claim 24 or 25, wherein said camera is capable of transmitting retrieved information regarding status of said at least one tool to the computer.

27. Computer program product comprising computer code means and/or software code portions for making a processor perform the steps of claim 1.

28. Computer program product according to claim 27 supplied via a network, such as Internet.
